# EUROPÄISCHE PATENTSCHRIFT

(11) **EP 2 933 056 B1**
(45) Veröffentlichungstag und Bekanntmachung des Hinweises auf die Patenterteilung: **18.10.2017**
(21) Anmeldenummer: 15156763.3
(22) Anmeldetag: 26.02.2015
(51) Int. Cl.: B23Q 11/00

(54) **SPINDEL FÜR EINE WERKZEUGMASCHINE MIT KÜHLKANÄLEN**
SPINDLE FOR A MACHINE TOOL WITH COOLING CHANNELS
BROCHE POUR UNE MACHINE-OUTIL DOTÉE DE CANAUX DE REFROIDISSEMENT

(30) Priorität: 11.04.2014 DE 202014101721 U
(43) Veröffentlichungstag der Anmeldung: 21.10.2015
(73) Patentinhaber: Paul Müller GmbH & Co. KG Unternehmensbeteiligungen, 90411 Nürnberg (DE)
(72) Erfinder: Feldmeier, Fritz, 90411 Nürnberg (DE)
(74) Vertreter: Lösch, Christoph Ludwig Klaus

(56) Entgegenhaltungen:
- DE-A1- 4 236 542
- DE-A1-102012 201 576
- JP-A- H0 631 585
- JP-A- H09 317 778

## Beschreibung

Die Erfindung betrifft eine Spindel für eine Werkzeugmaschine mit einem Gehäuse und einer in dem Gehäuse drehbar gelagerten, antreibbaren Welle.

Eine solche Spindel ist z.B aus dem Patentdokument JP09317778 bekannt. Es besteht allgemein das Bedürfnis, die Welle einer derartigen Spindel zu kühlen, um beispielsweise die Längsausdehnung der Welle zu minimieren, bzw. konstant zu halten. Ist die Spindel als Motorspindel ausgeführt - d.h. die Welle wird durch einen Elektromotor angetrieben - erhöht sich ferner durch die Kühlung der Welle im Allgemeinen der elektrische Wirkungsgrad des Elektromotors.

Die Verwirklichung der Wellenkühlung als (von einem Kühlmedium durchflossene) Durchgangsbohrung in axialer Richtung der Welle ist jedoch meist nicht sinnvoll, weil mindestens ein Wellenende aufgrund der Befestigung des Werkzeugs oder eines antreibbaren Bauteils an diesem verschlossen ist. Eine innerhalb der Welle angeordnete Kühleinrichtung ist technisch aufwändig, da mindestens zwei Längsbohrungen in der Welle vorhanden sein müssen, um eine Kühlmittelzirkulation zu ermöglichen. Außerdem kann eine derartige Kühleinrichtung die Wellensteifigkeit und das dynamische Verhalten der Spindel negativ beeinflussen.

Der Erfindung liegt die Aufgabe zugrunde, eine wirksame Kühlung der Spindel auf konstruktiv einfache Weise zu bewerkstelligen.
Diese Aufgabe wird durch eine Spindel mit den Merkmalen des Anspruchs 1 gelöst. Vorteilhafte Ausführungsformen sind in den Unteransprüchen beschrieben.

Die erfindungsgemäße Spindel für eine Werkzeugmaschine, weist ein Gehäuse und eine in dem Gehäuse drehbar gelagerte antreibbare Welle auf. Eine Buchse umschließt eine äußere Mantelfläche der Welle und im Verbindungsbereich zwischen Buchse und Welle sind mehrere wendelförmige Kühlkanäle ausgebildet.

Auf diese Weise können die Kühlkanäle auf konstruktiv einfache Weise entweder in der Innenwandung der Buchse oder auf der äußeren Mantelfläche der Welle ausgebildet werden. Auf Längsbohrungen innerhalb der Welle kann folglich verzichtet werden. Auch ist eine Zugänglichkeit der Wellenenden nicht nötig, da eine seitliche Zuführung von Kühlmittel möglich ist.

In der erfindungsgemäßen Ausführungsform enden die Kühlkanäle mit einem ersten Endbereich in einem ersten, in Umfangsrichtung der Welle ausgebildeten Ringkanal und mit einem zweiten Endbereich in einem zweiten, in Umfangsrichtung der Welle ausgebildeten Ringkanal. Die Ringkanäle stellen eine konstruktiv einfache Lösung zur Zufuhr und Abfuhr des den Kühlkanal durchfließenden Kühlmittels dar.

In einer weiteren vorteilhaften Ausführungsform weist die Spindel einen im Gehäuse ausgebildeten Kühlmittelzulauf und einen im Gehäuse ausgebildeten Kühlmittelablauf auf. Der Kühlmittelzulauf und der Kühlmittelablauf sind über ein Dichtsystem, insbesondere über eine berührungslose Dichtung, entweder mit dem Kühlkanal oder mit dem ersten oder zweiten Ringkanal verbunden. Die Kühlflüssigkeit wird also über das Dichtsystem an einem Ende der Buchse zugeführt, nimmt während des Durchlaufens des Kühlkanals Wärme auf und strömt durch das andere Dichtsystem am anderen Ende der Buchse wieder ab. Durch eine berührungslose Dichtung können Wellen auch bei hohen Wellendrehzahlen bzw. hohen Umfangsgeschwindigkeiten (z.B. Umfangsgeschwindigkeit an der Dichtstelle > 15 m/s) betrieben werden.

In der erfindungsgemäßen Ausführungsform sind die Kühlkanäle als Wendel ausgebildet. Auf diese Weise kann die Kühlstrecke erheblich verlängert werden.

In der erfindungsgemäßen Ausführungsform ist ein erster Kühlkanal als rechtsgängiger Wendel ausgebildet ist und ein weiterer Kühlkanal als linksgängiger Wendel. Derartige überlagerte rechts- und linksgängige Wendel sind insbesondere bei Wellen mit häufiger Drehrichtungsumkehr von Vorteil.

Der Kühlkanal und die Ringkanäle können sowohl in die Innenwandung der Buchse als auch in die äußere Mantelfläche der Welle eingearbeitet sein. Ferner können der Kühlkanal und die Ringkanäle einen rechteckigen, halbrunden oder dreieckigen Querschnitt aufweisen.

In vorteilhafter Weise ist die Buchse flüssigkeitsdicht mit der äußeren Mantelfläche der Welle verbunden, sodass ein die Kühlkanäle durchfließendes Kühlmittel lediglich über den Kühlmittelablauf entweichen kann. Als besonders vorteilhafte, flüssigkeitsdichte Verbindung, die zugleich fertigungstechnisch einfach herstellbar ist, hat sich ein Presssitz zwischen der Buchse und der Welle herausgestellt.

In bevorzugter Weise ist die Spindel als Motorspindel ausgebildet und/oder die Welle weist eine Werkzeugaufnahme für ein Werkzeug zur Werkstückbearbeitung auf.

Die Erfindung ist anhand von Ausführungsbeispielen in den Zeichnungsfiguren weiter erläutert. Es zeigen:
- Fig. 1: eine Teilschnittansicht einer erste Ausführungsform einer Spindel, die nicht unter dem Schutzumfang der Ansprüche fällt;
- Fig. 2: eine Teilschnittansicht einer zweite Ausführungsform der Spindel, die nicht unter dem Schutzumfang der Ansprüche fällt;
- Fig. 3: eine Welle mit als Wendel ausgebildeten Kühlkanälen, die nicht unter dem Schutzumfang der Ansprüche fällt;
- Fig. 4: eine weitere Welle mit als Wendel ausgebildeten Kühlkanälen;
- Fig. 5: eine Welle mit als rechts- und linksgängige Wendel ausgebildeten gemäß der Erfindung und
- Fig. 6: eine Buchse mit Kühlkanälen, die als Nut in axialer Richtung der Buchse ausgebildet sind, die nicht unter dem Schutzumfang der Ansprüche fällt.
Gleiche oder gleichwirkende Teile sind in den Figuren mit gleichen Bezugszeichen versehen.

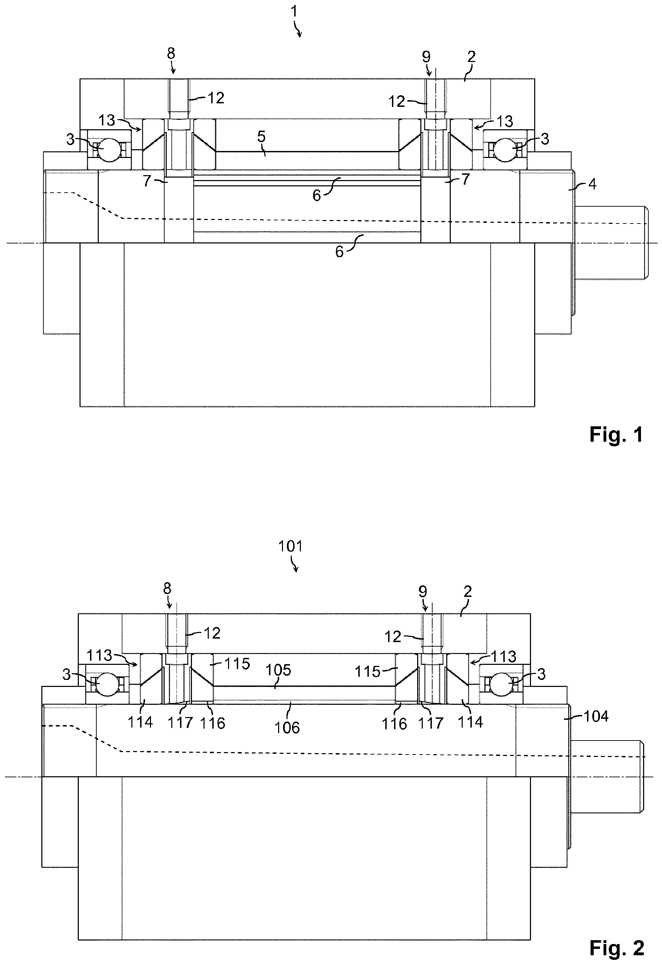

Fig. 1 zeigt in einer Teilschnittansicht eine Spindel 1 mit einer in einem Gehäuse 2 über zwei Kugellager 3 beidseitig drehbar gelagerten Welle 4. Auf der Welle 4 ist eine Buchse (Hülse) 5 aufgepresst/aufgeschrumpft, d.h. zwischen Welle 4 und Buchse 5 bildet sich in einem Verbindungsbereich eine drehfeste Verbindung aus (Presssitz). Auf diese Weise wird eine fluiddichte Verbindung zwischen Welle 4 und Buchse 5 hergestellt.

Im Verbindungsbereich sind auf der äußeren Mantelfläche der Welle 4 mehrere als axiale (d.h. in axialer Richtung der Welle verlaufende) Nute ausgebildete Kühlkanäle 6 vorhanden. Die Kühlkanäle 6 sind gleichmäßig über die äußere Mantelfläche der Welle 4 verteilt und parallel zueinander angeordnet. Die Kühlkanäle 6 enden jeweils beidseitig in je einem Ringkanal 7. Der Ringkanal 7 ist jeweils als umlaufender Einstich um die Welle 4 ausgebildet.

Im Gehäuse 2 der Spindel sind ein Kühlmittelzulauf 8 und ein Kühlmittelablauf 9 ausgebildet. Der Kühlmittelzulauf 8 bzw. der Kühlmittelablauf 9 bestehen jeweils im Wesentlichen aus einer Bohrung 12 innerhalb des Gehäuses, die in radialer Richtung der Welle 4 orientiert ist, und über ein Dichtsystem 13 mit dem jeweils zugehörigen Ringkanal 7 derart verbunden ist, dass ein im Kühlmittelzulauf 8 einströmendes Kühlfluid über die (erste) Bohrung 12, das (erste) Dichtsystem 13, den (ersten) Ringkanal 7, die Kühlkanäle 6, den (zweiten) Ringkanal 7, das (zweite) Dichtsystem 13 und die (zweite) Bohrung 12 zum Kühlmittelablauf 9 strömt. Die Dichtsysteme 13 sind hierbei als sogenannte berührungslose Dichtung ausgebildet.

Fig. 2 zeigt in einer Teilschnittansicht eine Spindel 101. Die Spindel 101 unterscheidet sich von der in Fig. 1 dargestellten Spindel 1 insbesondere in der Gestaltung der Welle, der Buchse, der Kühlkanäle und des Dichtsystems. Die Spindel 101 weist eine in einem Gehäuse 2 über zwei Kugellager 3 beidseitig drehbar gelagerten Welle 104 auf. Auf der Welle 104 ist eine Buchse 105 aufgepresst/aufgeschrumpft, d.h. zwischen Welle 104 und Buchse 105 bildet sich in einem Verbindungsbereich eine drehfeste Verbindung aus (Presssitz). In diesem Verbindungsbereich sind auf der Innenwandung der Buchse 105 mehrere als axiale (d.h. in axialer Richtung der Welle verlaufende) Nute ausgebildete Kühlkanäle 106 vorhanden. Die Kühlkanäle 106 sind gleichmäßig über die Innenwandung der Buchse 105 verteilt und parallel zueinander angeordnet.

Über Dichtsysteme 113 sind der Kühlmittelzulauf 8 und der Kühlmittelablauf 9 derart mit den Kühlkanälen 106 verbunden, dass ein im Kühlmittelzulauf 8 einströmendes Kühlfluid über die (erste) Bohrung 12, das (erste) Dichtsystem 113, die Kühlkanäle 106, das (zweite) Dichtsystem 113 und die (zweite) Bohrung 12 zum Kühlmittelablauf 9 strömt. Die Dichtsysteme 113 sind hierbei als sogenannte berührungslose Dichtung ausgebildet und besitzen jeweils einen Innenring 114 und einen Außenring 115. Der fest mit der Welle 4 verbundene Innenring 114 ist mit Aussparungen 116 und einem abgeschrägten Ringkanal 117 versehen, sodass ein ungestörter Fluss des Kühlmittels durch die Kühlkanäle 106 gegeben ist. Der Außenring 115 ist fest mit dem Gehäuse 2 verbunden.

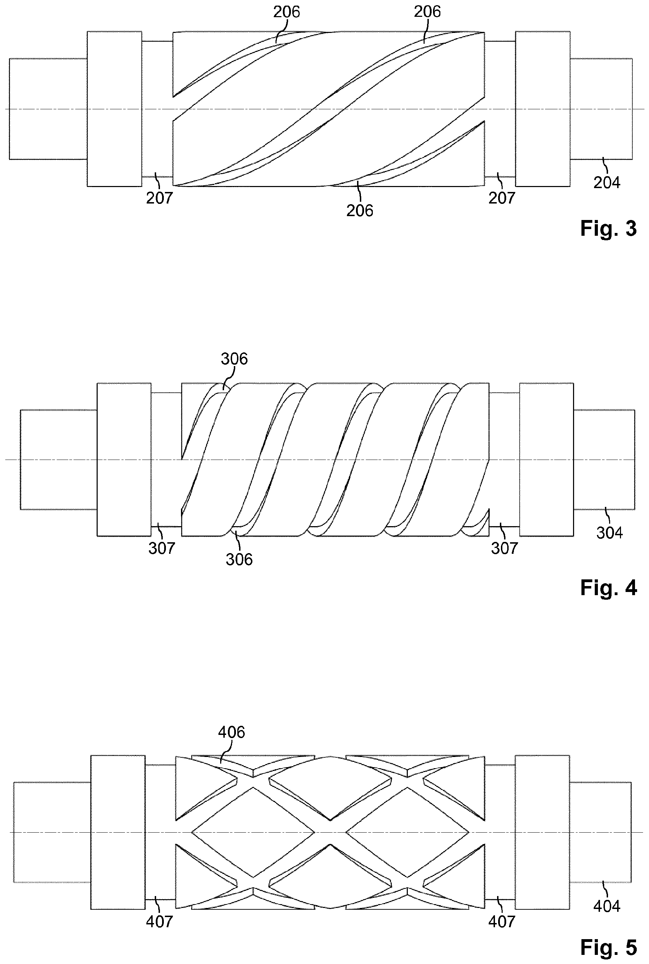

Fig. 3 bis Fig. 5 zeigen jeweils Wellen mit als Wendel ausgebildeten Kühlkanälen. Die in Fig. 3 dargestellte Welle 204 weist mehrere wendelförmige Kühlkanäle 206 mit einer relativ großen Steigung auf. Die in Fig. 4 dargestellten Kühlkanäle 306 der Welle 304 weisen eine geringere Steigung auf. Fig. 5 zeigt eine Welle 404 mit als rechtsgängige und linksgängige Wendel ausgebildete Kühlkanäle 406. Die Kühlkanäle 206, 306, 406 enden jeweils endseitig in Ringkanäle 207, 307 bzw. 407.

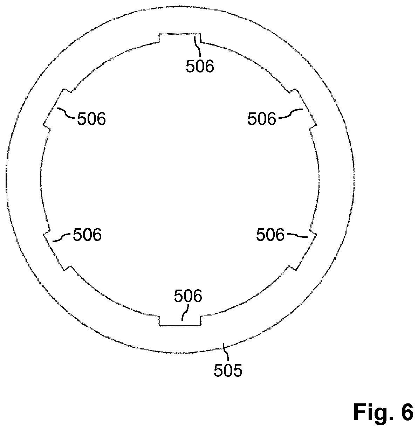

Fig. 6 zeigt eine Buchse 505 mit Kühlkanälen 506, die als Nute in der Innenwandung der Buchse ausgebildet sind und in axialer Richtung der Buchse 505 verlaufen.

### BEZUGSZEICHENLISTE

- 1, 101: Spindel
- 2: Gehäuse
- 3: Kugellager
- 4, 104, 204, 304, 404: Welle
- 5, 105, 505: Buchse
- 6, 106, 206, 306, 406, 506: Kühlkanal
- 7, 207, 307, 407: Ringkanal
- 8: Kühlmittelzulauf
- 9: Kühlmittelablauf
- 12: Bohrung
- 13, 113: Dichtsystem
- 114: Innenring
- 115: Außenring
- 116: Aussparung
- 117: Ringkanal

## Patentansprüche

1. Spindel (1, 101) für eine Werkzeugmaschine, insbesondere Motorspindel, mit einem Gehäuse (2) und einer in dem Gehäuse (2) drehbar gelagerten antreibbaren Welle (404), insbesondere mit einer Werkzeugaufnahme für ein Werkzeug zur Werkstückbearbeitung, wobei eine Buchse (5, 105) eine äußere Mantelfläche der Welle (404) umschließt,
**dadurch gekennzeichnet, dass**
im Verbindungsbereich zwischen Buchse (5, 105) und Welle (404) mehrere wendelförmige Kühlkanäle (406) ausgebildet sind,
wobei die Kühlkanäle (406) jeweils mit einem ersten Endbereich in einem ersten, in Umfangsrichtung der Welle ausgebildeten Ringkanal (407) und mit einem zweiten Endbereich in einem zweiten, in Umfangsrichtung der Welle ausgebildeten Ringkanal (407) enden, und wobei ein erster Kühlkanal als rechtsgängiger Wendel ausgebildet ist und ein weiterer Kühlkanal als linksgängiger Wendel ausgebildet ist.

2. Spindel nach Anspruch 1 aufweisend einen im Gehäuse (2) ausgebildeten Kühlmittelzulauf (8) und einen im Gehäuse (2) ausgebildeten Kühlmittelablauf (9),
wobei der Kühlmittelzulauf (8) und der Kühlmittelablauf (9) über ein Dichtsystem (13, 113), insbesondere über eine berührungslose Dichtung, mit dem ersten bzw. zweiten Ringkanal (407) verbunden sind.

3. Spindel nach einem der vorhergehenden Ansprüche, wobei der Kühlkanal (406) und die Ringkanäle (407) in die Innenwandung der Buchse (105) eingearbeitet sind.

4. Spindel nach einem der vorhergehenden Ansprüche, wobei der Kühlkanal (406) und die Ringkanäle (407) in die äußere Mantelfläche der Welle (404) eingearbeitet sind.

5. Spindel nach einem der vorhergehenden Ansprüche, wobei der Kühlkanal (406) einen rechteckigen, halbrunden oder dreieckigen Querschnitt aufweist.

6. Spindel nach einem der vorhergehenden Ansprüche, wobei die Buchse (5, 105) durch einen Presssitz mit der äußeren Mantelfläche der Welle (404) verbunden ist.

## Claims

1. Spindle (1, 101) for a machine tool, in particular a motor spindle, having a housing (2) and a driveable shaft (404) mounted rotatably in the housing (2), in particular having a tool receptacle for a tool for workpiece machining, wherein a bushing (5, 105) surrounds an outer lateral surface of the shaft (404),
**characterized in that**
a plurality of helical cooling channels (406) are formed in the connecting region between the bushing (5, 105) and shaft (404),
wherein the cooling channels (406) each end with a first end region in a first annular channel (407) formed in the circumferential direction of the shaft and with a second end region in a second annular channel (407) formed in the circumferential direction of the shaft, and wherein a first cooling channel is configured as a right-handed helix and a further cooling channel is configured as a left-handed helix.

2. Spindle according to Claim 1, having a coolant inlet (8) formed in the housing (2) and a coolant outlet (9) formed in the housing (2),
wherein the coolant inlet (8) and the coolant outlet (9) are connected to the first and second annular channel (407) via a sealing system (13, 113), in particular via a non-contact seal.

3. Spindle according to either of the preceding claims, wherein the cooling channel (406) and the annular channels (407) have been worked into the inner wall of the bushing (105).

4. Spindle according to one of the preceding claims, wherein the cooling channel (406) and the annular channels (407) have been worked into the outer lateral surface of the shaft (404).

5. Spindle according to one of the preceding claims, wherein the cooling channel (406) has a rectangular, semicircular or triangular cross section.

6. Spindle according to one of the preceding claims, wherein the bushing (5, 105) is connected to the outer lateral surface of the shaft (404) by a press fit.

## Revendications

1. Broche (1, 101) pour une machine-outil, en particulier une broche de moteur, comprenant un boîtier (2) et un arbre (404) pouvant être entraîné, supporté à rotation dans le boîtier (2), en particulier avec un logement d'outil pour un outil d'usinage de pièces, une douille (5, 105) entourant une surface d'enveloppe extérieure de l'arbre (404),
**caractérisée en ce que**
plusieurs canaux de refroidissement de forme ondulée (406) sont réalisés dans la région de connexion entre la douille (5, 105) et l'arbre (404),
les canaux de refroidissement (406) se terminant à chaque fois avec une première région d'extrémité dans un premier canal annulaire (407) réalisé dans la direction périphérique de l'arbre et avec une deuxième région d'extrémité dans un deuxième canal annulaire (407) réalisé dans la direction périphérique de l'arbre, et un premier canal de refroidissement étant réalisé sous forme d'hélice à droite et un autre canal de refroidissement étant réalisé sous forme d'hélice à gauche.

2. Broche selon la revendication 1, présentant une alimentation en réfrigérant (8) réalisée dans le boîtier (2) et une sortie de réfrigérant (9) réalisée dans le boîtier (2),
l'alimentation en réfrigérant (8) et la sortie de réfrigérant (9) étant reliées par le biais d'un système d'étanchéité (13, 113), en particulier par le biais d'un joint d'étanchéité sans contact, au premier, respectivement au deuxième canal annulaire (407).

3. Broche selon l'une quelconque des revendications précédentes, dans laquelle le canal de refroidissement (406) et les canaux annulaires (407) sont réalisés dans la paroi interne de la douille (105).

4. Broche selon l'une quelconque des revendications précédentes, dans laquelle le canal de refroidissement (406) et les canaux annulaires (407) sont réalisés dans la surface d'enveloppe extérieure de l'arbre (404).

5. Broche selon l'une quelconque des revendications précédentes, dans laquelle le canal de refroidissement (406) présente une section transversale rectangulaire, semi-circulaire ou triangulaire.

6. Broche selon l'une quelconque des revendications précédentes, dans laquelle la douille (5, 105) est connectée à la surface d'enveloppe extérieure de l'arbre (404) par un ajustement serré.
